# EUROPÄISCHE PATENTANMELDUNG

(11) **EP 0 795 378 A1**
(43) Veröffentlichungstag der Anmeldung: **17.09.1997**
(21) Anmeldenummer: 97104212.2
(22) Anmeldetag: 13.03.1997
(51) Int. Cl.: B23Q 35/00, B23Q 35/10, B23Q 35/42, B27F 5/12

(54) **Vorrichtung zum Bearbeiten von insbesondere stabförmigen Werkstücken, wie bspw. Fenster- oder Türrahmenprofile**

(30) Priorität: 13.03.1996 DE 19609729
(71) Anmelder: Eisenbach, Bernhard, D-65611 Brechen (DE)
(72) Erfinder: Eisenbach, Bernhard, D-65611 Brechen (DE)
(74) Vertreter: Müller, Eckhard, Dr.

(57) **Zusammenfassung**

Es handelt sich um eine Vorrichtung zum Bearbeiten von insbesondere stabförmigen Werkstücken, wie bspw. Fenster- oder Türrahmenprofile (2), mit einer an einem Maschinengestell angeordneten Aufnahme (1) für die Werkstücke (2) und wenigstens eine in einer Ebene und in einer Richtung senkrecht dazu verfahrbaren Bearbeitungseinheit (7, 9) mit wenigstens einem Bearbeitungswerkzeug (8, 10) und zugeordneter, einen Fühler (11) sowie eine das jeweilige Bohr- oder Fräsbild wiedergebende Schablone (12) aufweisenden Kopiereinrichtung. Dabei ist es vorgesehen, daß die wenigstens eine Bearbeitungseinheit (7, 9) an einem um eine Achse (5) schwenkbaren und längs dieser Schwenkachse (5) von einer Ausgangsstellung in eine Bearbeitungsstellung verschiebbaren Werkzeughalter (6) gehalten ist, daß die Schwenkachse (5) ihrerseits über eine Schwinge o. dgl. Schwenkarm (4) an einer mit dem Maschinengestell verbundenen Säule (3) schwenkbar gelagert ist und daß der Fühler (11) der Kopiereinrichtung koaxial zum Bearbeitungswerkzeug (8) ausgebildet und die Schablone (12) über bzw. an der Bearbeitungsposition an dem Werkstück (2) angeordnet ist.

## Beschreibung

Die Erfindung bezieht sich auf eine Vorrichtung zum Bearbeiten von insbesondere stabförmigen Werkstücken, wie bspw. Fenster- oder Türrahmenprofile, gemäß dem Oberbegriff des Anspruches 1.

Derartige Fräs- und Bohrmaschinen werden zum Herstellen von Aussparungen in Holz-, Metall- oder Kunststoffprofile, insbesondere für den Fenster- oder Türenbau eingesetzt.

Die bisher bekannten Kopierfräsen, wie bspw. in der EP 0 517 162 A2 beschrieben, sind üblicherweise in drei Ebenen verfahrbar, was allein schon im Hinblick auf die erforderlichen Führungen ein erheblichen konstruktiven Aufwand und damit auch entsprechende Kosten bedingt. Ein wesentlicher Nachteil der bekannten Kopierfräsen ist auch, daß nach dem Eintauchen des Fräsers in das Werkstück dieser seitlich verläuft bzw. wegläuft, wenn der Vorschub einsetzt. Dies ist dadurch bedingt, daß bei Kopierfräsern das Kopierorgan weit entfernt von der eigentlichen Frässtelle liegt und sich das Spiel in den Führungen und zusätzlich die Instabilität der Führungen, Säulen o. dgl. auf die Präzision der Fräsungen auswirkt.

Davon ausgehend liegt der Erfindung die Aufgabe zugrunde, eine Vorrichtung der eingangs genannten Art anzugeben, bei welcher die genannten Nachteile überwunden sind und welche sich darüber hinaus durch einen kompakten Aufbau und eine einfache Handhabung auszeichnet.

Die erfindungsgemäße Aufgabe wird i. w. gelöst durch die Merkmale des Anspruches 1.

Vorteilhafte Ausgestaltungen finden sich in den Unteransprüchen.

Durch die Erfindung ist eine freie Bewegung der Bearbeitungseinheit in der Ebene ermöglicht. Die hohe Präzision bei der Einarbeitung der Bohrungen, Fräsungen und dgl. in die Werkstück wird dadurch erreicht, daß das Bearbeitungswerkzeug vermittels des koaxial dazu ausgebildeten Kopierorgans bzw. Fühlers direkt in der Schablone der Kopiereinrichtung geführt ist, so daß das Bohr- bzw. Fräsbild unmittelbar auf das Werkstück übertragen wird. Auf kostspielige dreidimensionale Führungen kann verzichtet werden. Da sich die erfindungsgemäße Vorrichtung insbesondere für eine Handführung ausgebildet ist, können die sonst erforderlichen Sicherheitseinrichtungen auf ein Mindestmaß reduziert werden.

Nach einer ersten besonderen Ausführungsform der Erfindung ist die wenigstens eine Bearbeitungseinheit mittels einer sich an der Schwenkachse bzw. an deren Schwenkbarm abstützenden Hebelmechanik, vorzugsweise zwischen einstellbaren Anschlägen, längs der Verschwenkachse verschiebbar, so daß nur ein geringer Kraftaufwand erforderlich ist. Bspw. kann ein Gelenkhebel vorgesehen sein, mit einem von Hand zu betätigenden Hebelarm, welcher schwenkbar an dem Werkzeughalter gelagert ist und über ein Hebelgelenk mit einem sich an der Schwenkachse bzw. dem Hebelarm oder der Schwinge abstützenden Hebel verbunden ist. Vorzugsweise ist aus Gründen der Sicherheit die wenigstens eine Bearbeitungseinheit gegen Federkraft von der Ausgangsstellung in die Bearbeitungsstellung an dem Werkstück verschiebbar.

Die Einsatzmöglichkeiten der erfindungsgemäßen Vorrichtungen werden noch dadurch erweitert, daß der Schwenkarm bzw. die Schwinge axial verstellbar an der maschinengestellseitigen Säule gelagert ist. Hierdurch ist es möglich, unterschiedliche Eintauchtiefen des Bearbeitungswerkzeuges in das Werkstück einzustellen.

Nach einer wiederum anderen Ausgestaltung der Erfindung sind an der mit dem Maschinengestell verbundenen Säule doppelseitige Hebelarme bzw. Schwingen mit zugeordneten Werkzeugeinheiten angeordnet, so daß eine kompakte Bearbeitungsstation mit vielfältigen Möglichkeiten der Werkstückbearbeitung mit unterschiedlichen Werkzeugen ermöglicht ist.

Vorzugsweise weist die erfindungsgemäße Vorrichtung wenigstens eine vertikale und eine horizontale Säule sowie wenigstens eine, vorzugsweise in ihre Neigung verstellbare schräg ausgerichtete Säule mit jeweils zugeordneten Bearbeitungseinheiten auf. Mit den vertikal und horizontal ausgerichteten Bearbeitungswerkzeugen lassen sich bspw. Belüftungsschlitze in Profile für Fensterrahmen einlassen, wobei das gegenüber der Horizontalen schräg ausgerichtete Bearbeitungswerkzeug zum Einbringen von Entwässerungsschlitzen zur Wasserabführung bei Fensterrahmenprofilen eingesetzt werden kann.

Die Einsatzmöglichkeiten der erfindungsgemäßen Vorrichtung lassen sich noch dadurch erweitern, daß an der vertikal ausgerichteten Säule zusätzlich eine Bohreinheit mit horizontal ausgerichtetem Bohrwerkzeug, vorzugsweise mit einem Mehrfachbohrkopf, schwenkbar gelagert ist. Hierdurch lassen sich bspw. Bohrungen für Griffoliven für einen Griff in das Fensterprofil einbringen. Durch die Schwenkbarkeit der Bohreinheit kann diese in einer horizontalen Ebene in und aus dem Arbeitsbereich herausgeschwenkt werden, um bspw. eine andere Bearbeitungseinheit, etwa mit horizontaler Vorschubbewegung, einzuschwenken. Bei einer derart ausgestalteten Vorrichtung sind an sich vier verschiedene Bearbeitungsmaschinen in einer einzigen vereint.

Auch die zusätzliche Bohreinheit ist mittels einer Hebelmechanik gegen Federkraft von einer Ausgangsstellung in eine Arbeitsstellung an dem Werkstück mit horizontaler Vorschubbewegung verschiebbar.

Nach einem eigenständigen Gedanken der Erfindung ist der Fühler der Kopiereinrichtung in Art einer das jeweilige Bearbeitungswerkzeug koaxial umgebenden, an dem Werkzeughalter festlegbaren Kopierhülse ausgebildet, welcher in die das gewünschte Bohr- bzw. Fräsbild wiedergebende Ausnehmungen der Schablone eintaucht. Hierdurch ist eine präzise Übertragung des Bohr- bzw. Fräsbildes auf das Werkstück erreicht, ohne daß das Bearbeitungswerkzeug beim Eindringen in das Werkstück und Einsetzen des Vorschubes seitlich verläuft. Dabei kann die Kopierhülse so ausgebildet sein, daß das Bearbeitungswerkzeug innerhalb der Kopierhülse gelagert ist.

Um eine schnelle Bearbeitung zu ermöglichen, ohne daß das Bearbeitungswerkzeug immer ganz aus der Schablone herausgefahren und erneut eingetaucht werden muß, ist es nach der Erfindung vorgesehen, daß zwischen das Bohr- bzw. Fräsbild wiedergebenden Aussparungen in der Schablone Schlitze vorgesehen sind, durch welche sich das Bearbeitungswerkzeug während des Verfahrens zwischen den Aussparungen erstreckt, wobei der axiale Verschiebeweg des Bearbeitungswerkzeugs im Bereich der Schlitze durch dem Fühler der Kopiereinrichtung zugeordnete Anschläge begrenzt ist. Durch die Begrenzungen im Bereich der Schlitze ist der Vorschub der Kopierhülse zum Werkstück hin begrenzt. Die Kopierhülse ist in ihrer Vorschubbewegung nur dort frei, wo gefräst oder gebohrt werden soll.

Nach einer anderen Ausführungsform der Erfindung ist es vorgesehen, daß auf der der Bearbeitungseinheit zugewandten Seite der Schablone beiderseits der die Aussparungen miteinander verbindenden Schlitze vertieft in die Schablonenwandung eingelassenen Anschlagschultern für den Fühler bzw. die Kopierhülse vorgesehen sind, welche gleichzeitig eine Führung für die Kopierhülse bilden. Die die Aussparungen miteinander verbindenden Schlitze sollten selbstverständlich etwas größer als der Durchmesser des jeweiligen Bearbeitungswerkzeuges sein.

Dadurch, daß nach der Erfindung die Schablone unmittelbar über der Bearbeitungsposition des Werkstückes zu liegen kommt, ist es auch möglich, daß die Schablone mit, vorzugsweise einstellbaren Anschlagelementen zur Positionierung des Werkstückes versehen ist. Hierdurch ist ein präzises und fluchtgenaues Einlassen von Bohrungen, Fräsungen auch auf gegenüberliegenden Seiten des Werkstückes, insbesondere eines Fenster- oder Rahmenprofiles ermöglicht.

Vorteilhaft hierbei ist, daß die Schablone mittels Führungen quer zur Längserstreckung des Werkstückes verschiebbar bzw. einstellbar ist, wodurch bspw. mittels einer Lehre oder auch durch vorhergehendes Einbringen eines Bohrloches in den jeweiligen Profilstab eine selbsttätige Ausrichtung der Kopierschablone möglich ist. Denkbar ist es insoweit auch, daß die Schablone einen Zeiger aufweist, welcher einen ggf. bei der Fertigung des Profils bereits vorgesehenen Anriß oder eine entsprechende Nut an dem Profil ansteuert.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnung. Dabei bilden alle beschriebenen und/oder bildlich dargestellten Merkmale für sich oder in beliebiger sinnvoller Kombination den Gegenstand der vorliegenden Erfindung.

Es zeigen:
- Figur 1: die Ansicht einer möglichen Ausführungsform einer erfindungsgemäßen einmotorigen Bohr- oder Fräsvorrichtung, die eine Aussparung in eine Holzprofil fräst,
- Figur 1a: eine Draufsicht auf die Vorrichtung gemäß Figur 1,
- Figur 2 und 2a: eine Ansicht einer gegenüber Figur 1 geänderten Ausführung eines einmotorigen Bohr- oder Fräsvorrichtung beim Bearbeiten einer auf beiden Seiten des Profils herzustellenden Aussparung für einen Schloßzylinder,
- Figur 2b: eine Draufsicht auf die Vorrichtung gemäß Figuren 2, 2a,
- Figur 3: eine Ansicht einer gegenüber Figuren 1 und 2 wiederum veränderten Bohr- bzw. Fräsvorrichtung mit zusätzlichem Dreifach-Bohrkopf, während der Bearbeitung eines Rechteckrohres,
- Figur 3a: eine Draufsicht auf die Vorrichtung gemäß Figur 3,
- Figur 3b: die Vorrichtung gemäß Figuren 3 bzw. 3a, wobei jedoch die Bohreinheit weggeschwenkt ist,
- Figur 4: eine weitere Ausführungsform einer erfindungsgemäßen Bohr- bzw. Fräsvorrichtung mit drei Fräsmotoren und einer Bohrmaschine beim Fräsen von Wasserschlitzen in ein Kunststoffprofil,
- Figur 4a: eine Draufsicht auf die Vorrichtung gemäß Figur 4,
- Figur 5: eine weitere Ausführungsform einer erfindungsgemäßen Vorrichtung mit einer Handbohrmaschine,
- Figur 5a: einen Querschnitt gemäß Figur 5,
- Figur 6: die Anordnung eines Fräsmotors anstelle einer Bohrmaschine gemäß Figur 5,
- Figur 6a: einen Querschnitt der Anordnung gemäß Figur 6,

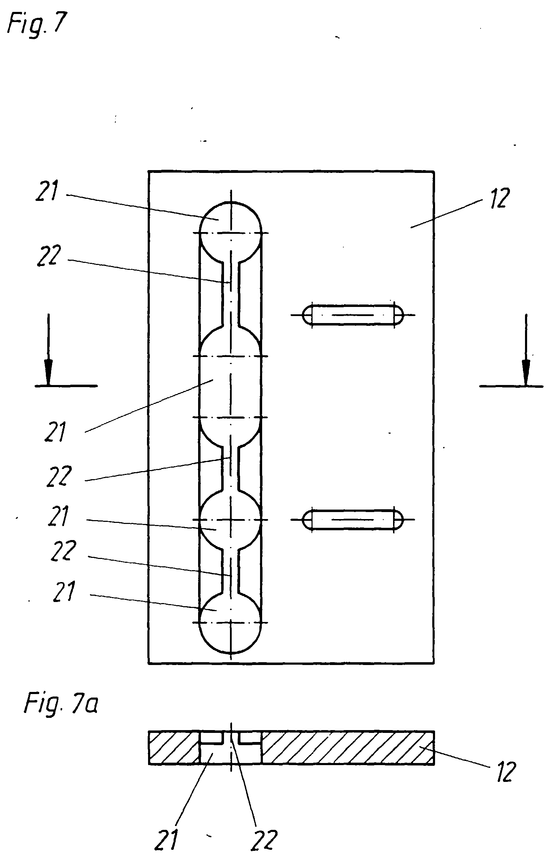

- Figur 7: eine mögliche Ausführungsform einer Kopierschablone nach der Erfindung und
- Figur 7a: einen Querschnitt der Kopierschablone gemaß Figur 7.

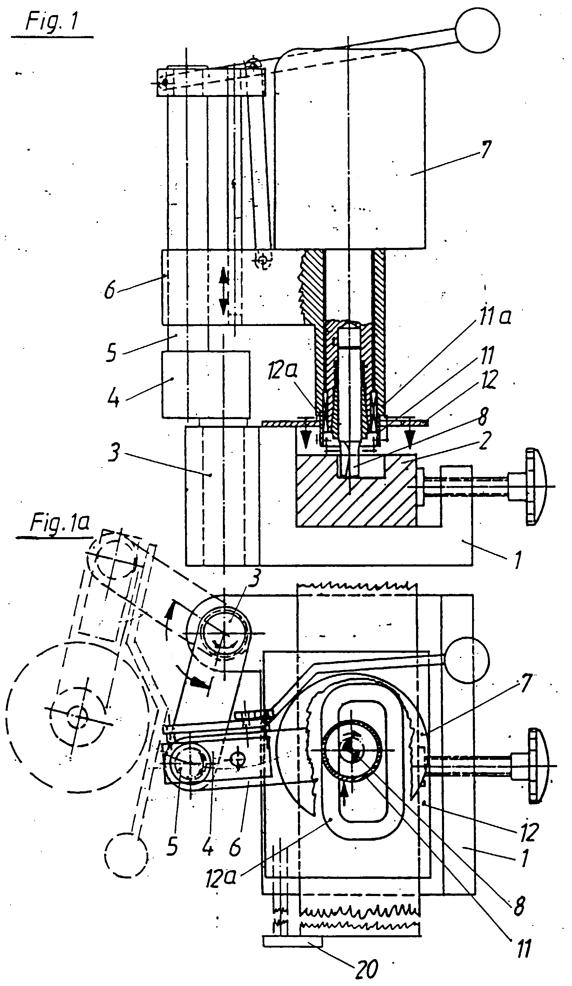

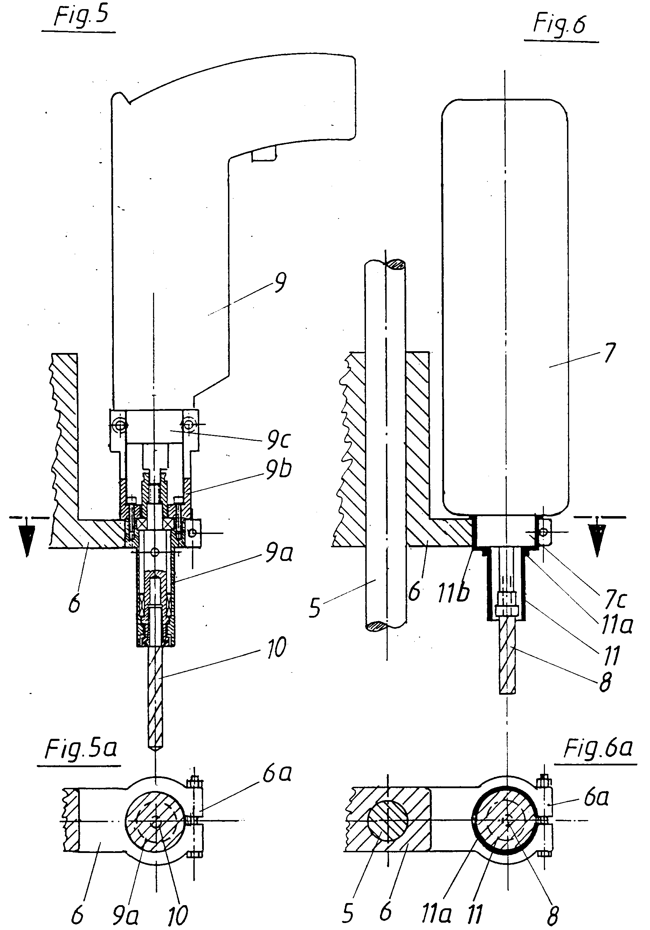

Die in Figuren 1 und 1a dargestellte Bohr- oder Fräsvorrichtung dient bspw. zum Einlassen von Aussparungen in ein Werkstück 2, vorliegend einen Holzprofilstab 2. Das Werkstück 2 ist in einer Aufnahme 1 bzw. einer Grundplatte der Maschine eingespannt. An dem Maschinengestell sind ein oder mehrere Säulen 3 angeordnet, an welchen verschwenkbar jeweils ein Hebelarm 4 oder eine Schwinge gelagert ist, welcher bzw. welche wiederum eine Achse 5 tragen. Auf dieser Achse 5 ist drehbar und axial verschiebbar ein Werkzeughalter 6 angeordnet, an welchem eine Bearbeitungseinheit in Form eines Fräsmotors 7 oder einer Bohrmaschine 9 (vgl. auch Figuren 5 und 6) befestigbar ist.

Der Fräsmotor 7 und die Bohrmaschine 9 können über Handhebel in der Höhe verschiebbar und verschwenkbar über den gesamten Arbeitsbereich und auch aus dem Arbeitsbereich heraus weggeschwenkt werden, so daß danach andere, in gleicher Weise an dem Maschinengestell angeordnete Fräser oder Bohrer in den Arbeitsbereich eingeschwenkt werden können.

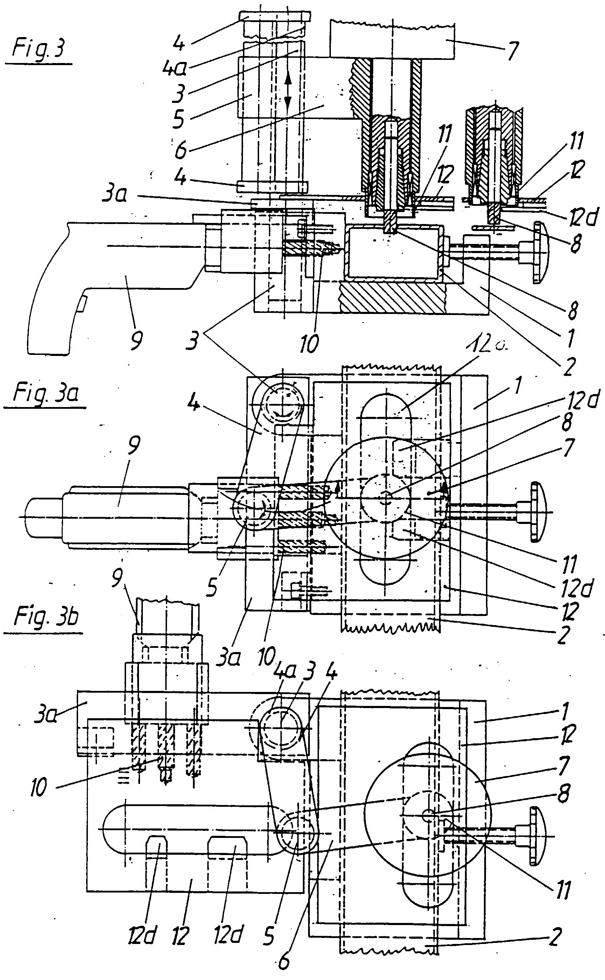

Selbstverständlich ist es auch denkbar, die Schwenkeinrichtung der Maschine so auszuführen, wie sie in Figuren 3 bis 3b dargestellt ist, wobei anstelle eines Schwenkarmes gemäß Figuren 1, 1a zwei Arme 4 an einem Rohr 4a befestigt sind, das auf einer gegenüber Figur 1 verlängerten Säule 3 schwenkbar und höhenverstellbar gelagert ist.

Am Fräsmotor 7 ist ein Fräser 8 bzw. an der Bohrmaschine ein Bohrer 10 als Bearbeitungswerkzeug eingespannt. Unmittelbar hinter der Bohrer- oder Fräserschneide ist um den Bohrer 10 bzw. Fräser 8 eine Kopierhülse 11 angeordnet, die vor dem Eindringen des Fräsers 8 bzw. des Bohrers 10 in das Werkstück 2 in eine an der Grundplatte der Aufnahme fest montierte Schablone 12 eintaucht. Während der Profilstab 2 in Quer- und Längsrichtung gegen Anschlagflächen gespannt und somit fest in der Aufnahme gehalten ist, kann die Schablone 12 relativ dazu eingestellt werden.

Die Arbeitsweise der Vorrichtung gemäß Figur 1 gestaltet sich wie folgt:

Beim Eintauchen in das Werkstück 2 liegt die Kopierhülse 11 an der Aussparung 12a der Schablone 12 an und wird beim Verschieben durch den Schnittdruck des Fräsers 8 ständig fest an die Aussparung 12a gepreßt. Weil das Werkzeug 8 mit der Kopierhülse 11 und der Profilstab 2 mit der Schablone 12 fest verbunden sind, und andererseits die Kopierschablone 12 unmittelbar über der Frässtelle an dem Werkstück 2 montiert ist, wird die Aussparung 12a bzw. das Bohr- und/oder Fräsbild in der Schablone 12 genau abkopiert. Es kann daher auf kostspielige und sperrige dreidimensionale Führungen verzichtet werden. Es genügt eine einfache Vorrichtung, die den Fräser 8 schwenkbar und höhenverstellbar senkrecht zum Werkstück 2 führt.

Weil die Bearbeitungseinheit bzw. der Fräser 7 platzsparend nur an einer vertikalen Säule 3 wegschwenkbar gelagert ist, können auch andere Bearbeitungseinheiten vertikal und horizontal an dem Maschinengestell angeordnet werden. So können Bohrungen und Fräsungen im gesamten Arbeitsbereich der Maschine durch verschiedene Werkzeuge ausgeführt werden, indem die jeweils nicht benötigten Werkzeuge mit der zugeordneten Bearbeitungseinheit aus dem Arbeitsbereich herausgeschwenkt werden und die Bearbeitungseinheit mit dem gewünschten Werkzeug eingeschwenkt wird.

Selbstverständlich ist es auch denkbar, die Hebelarme bzw. Schwingen 4 an der Säule 3 doppelseitig auszubilden und an jedem Hebelarm bzw. jeder Schwinge eine Bearbeitungseinheit anzuordnen. Dabei befindet sich die jeweils eine Bearbeitungseinheit in Bearbeitungsstellung, während die andere aus dem Arbeitsbereich herausgeschwenkt ist. Der Vorteil dieser Ausführungsform ist, daß auf gleichem Raum praktisch die doppelte Anzahl von Bearbeitungseinheiten angeordnet werden kann.

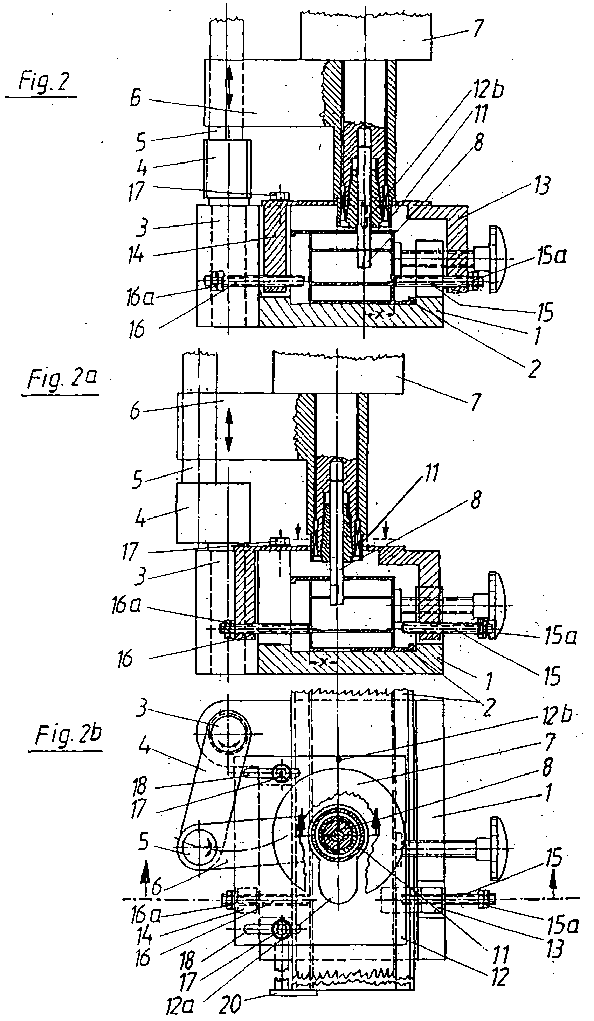

Bei breiteren und mehrwandigen Aluminiumprofilen können Aussparungen nicht von einer Seite durch alle Wandungen des Profilstabes 2 vorgenommen werden; der Fräser 8 müßte sonst sehr weit aus der Aufnahme, bspw. der Spannzange, herausragen. In der Praxis wird daher so vorgegangen, daß der Fräser 8 nur kurz aus der Spannzange der Bearbeitungseinheit herausgespannt wird, so daß die Ausnehmungen von zwei Seiten genau fluchtend hergestellt werden müssen. Weil die Schablone 12 unmittelbar über dem Profilstab 2 angeordnet ist, wird man die Schablone 12 mit vorteilhafterweise fluchtenden verstellbaren Profilanschlägen 15, 16 ausrüsten, die am Profilstab 2 wechselweise anschlagen und hierdurch eine präzise Positionierung der Fräs- bzw. Bohrgeometrien auch auf gegenüberliegenden Profilseiten ermöglichen, wie dies in den Figuren 2, 2a, 2c dargestellt ist.

Dies ist bei den herkömmlichen Maschinen nicht möglich, weil die Kopierschablone entfernt von dem zu bearbeitenden Werkstück angeordnet ist.

Die Schablone 12 ist bei dem Ausführungsbeispiel gemäß Figuren 2 bis 2c mit Langlöchern 18 versehen und quer zur Längserstreckung des Profilstabes 2 verschiebbar. An der Schablone 12 sind die Anschlaghalter 13 und 14 befestigt. In diesen Anschlaghaltern 13, 14 sind die die Anschläge bildenden Schrauben 15 und 16 einstellbar. Die Schrauben 15, 16 können zurückgeschraubt werden oder auch wegklappbar ausgebildet sein.

Selbstverständlich ist es auch möglich, mit Hilfe der Anschlagschrauben 15, 16 mehrere im seitlichen Abstand nebeneinander angeordnete Bohrungen oder Fräsungen an einem Profilstück vorzunehmen. Die Verstellung der Schablone 12 selbst kann bspw. auch pneumatisch, elektrisch, mechanisch erfolgen.

Die Arbeitsweise der Vorrichtung gemäß Figuren 2, 2a, 2b stellt sich wie folgt dar:

Zunächst werden die Anschlagschrauben 15, 16 auf ein bestimmtes Maß, das z.B. dem Maß des Schlosses entspricht, eingestellt, wobei dieses Maß durch zwei Kontermuttern 15a und 16 a fixiert wird. Die Schablone 12 wird nun an der Grundplatte 1 so befestigt, daß sie noch in den Langlöchern 18 verschoben werden kann. Danach wird der Profilstab 2 am Längenanschlag 20 angelegt und eingespannt. Die Anschlagschraube 15 wird nun in Richtung des Profilstabs 2 bis zu den Muttern 15a vorgeschraubt und die Schablone 12 in den Langlöchern 18 verschoben, bis die Anschlagschraube 15 anschlägt. Danach wird die Schablone 12 mit den Schrauben 17 festgeschraubt. Voraussetzung hierfür ist natürlich, eine entsprechende - in den Figuren nicht gesondert dargestellte - Parallelführung der Schablone 12.

Nach dem Fräsen der einen Profilstabseite wird der Profilstab 2 um seine Längsachse gedreht, am Längenanschlag 20 angelegt und erneut eingespannt. Nach dem Lösen der Schrauben 17 wird die Anschlagschraube 15 zurückgeschraubt und die Anschlagschraube 16 bis zu den Kontermuttern 16a vorgeschraubt. Danach wird die Schablone 12 in den Langlöchern 18 nach der anderen Seite verschoben, bis die Anschlagschraube 16 am Profilstab 2 anschlägt. Nach dem Festschrauben der Schablone 12 mittels der Schrauben 17 kann die zweite Seite des Profilstabs 2 fluchtgenau gefräst werden.

Selbstverständlich ist es auch möglich, anstelle eines Zurückschraubens die Anschlagschrauben 15, 16 einfach zurückzuklappen.

Weiterhin ist es mit der Kopierhülse 11 möglich, eine selbsttätige Ausrichtung der Schablone 12 zu erreichen, um bspw. Drückerlöcher oder Schloßkastenausnehmungen bei Fenster- oder Türrahmen in dem Profilstab 2 einzulassen. Hierfür wird der Profilstab 2 zunächst mit einem Bohrer in der Mitte des später zu erzeugenden Profilzylinders oder des Drückerloches durchbohrt, wobei dieser Bohrer den gleichen Durchmesser wie der Fräser 8 aufweisen muß. Eine weitere Voraussetzung ist, daß die Stufe 11a an der Kopierhülse 11 einen der Ausnehmungen 12a der Kopierschablone 12 entsprechenden Durchmesser besitzt. Wenn nun das zu bearbeitende Profilstück 2 in die Vorrichtung eingelegt ist, wird mit dem Fräser 8 in das zuvor erzeugte Bohrloch eingetaucht, und zwar so tief, bis die Stufe 11a der Kopierhülse 11 in der Ausnehmung 12a der Kopierschablone 12 aufgenommen ist. Hierdurch ist eine selbsttätige Ausrichtung der Kopierschablone 12 erreicht. Danach braucht die Kopierschablone 12 nur noch mit den Schrauben 17 festgeschraubt zu werden.

Eine weitere Arbeitserleichterung kann dadurch erreicht werden, daß die Schablone 12 einen Zeiger 12b aufweist, welcher einen ggf. bei der Fertigung eines Aluminiumprofils bereits vorgesehenen Anriß oder Nut an dem Profil 2 ansteuert.

Sind mehrere Aussparungen in einer Schablone 12, so müßte der Fräser 8 oder Bohrer immer ganz aus der Schablone 12 herausgefahren und erneut eingetaucht werden. Um dies zu vermeiden, können gemäß Figuren 3 bis 3b unterhalb der Schablone 12 Begrenzungen 12d angeordnet werden, welche die Eintauchtiefe der Kopierhülse 11 in Richtung zum Profilstab 2 begrenzen und den Weg der Kopierhülse 11 nur dort freigeben, wo gefräst werden soll.

Derselbe Effekt läßt sich durch eine in ihrer Dicke stärker ausgeführten Schablone 12 erreichen, bei der auf der einen Seite der gesamte Weg der Kopierhülse 11 ausgespart ist und auf der anderen Seite nur die Aussparungen 21 für die Fräsungen vorhanden sind. Die Aussparungen 21 sind durch einen Schlitz 22, der etwas größer als der Fräserdurchmesser ist, verbunden.

An der Säule 3 kann, wie aus Figuren 3, 3a, 3b zu ersehen, eine Platte 3a angeordnet sein, auf der die Kopierschablone 12 und darunter z.B. eine Bohrmaschine 9 mit einem Dreifachbohrkopf 10 auf einer Führung befestigt ist. Nach Wegschwenken der Platte 3a, der Bohrmaschine 9, des Dreifachbohrkopfes 10 und der Schablone 12 kann auf der Grundplatte der Aufnahme eine andere Kopierschablone befestigt werden, die einen anderen Arbeitsgang ermöglicht; die weggeschwenkte Position der Bohrmaschine 9 ist aus Figur 3b zu ersehen.

Selbstverständlich kann auch eine weitere Bohrmaschine 9 oder ein Fräsbohrer 7 anstelle des Dreifachbohrkopfes 10 horizontal angeordnet werden.

Die Bohrer des Dreifachbohrkopfes 10 haben gemäß Figuren 3 bis 3b unterschiedliche Längen, wobei der mittlere, im Durchmesser stärkere Bohrer als Stufenbohrer ausgebildet ist. Weil bei Fensterprofilen nur dünne, wenige Millimeter starke Wandungen gebohrt werden müssen, können die Bohrerlängen so abgestuft werden, daß jeweils nur eine Bohrerschneide in Eingriff mit dem Werkstück gelangt und dadurch eine wesentlich kleinere, bspw. leistungsschwächere Bohrmaschine 9 verwendet werden kann.

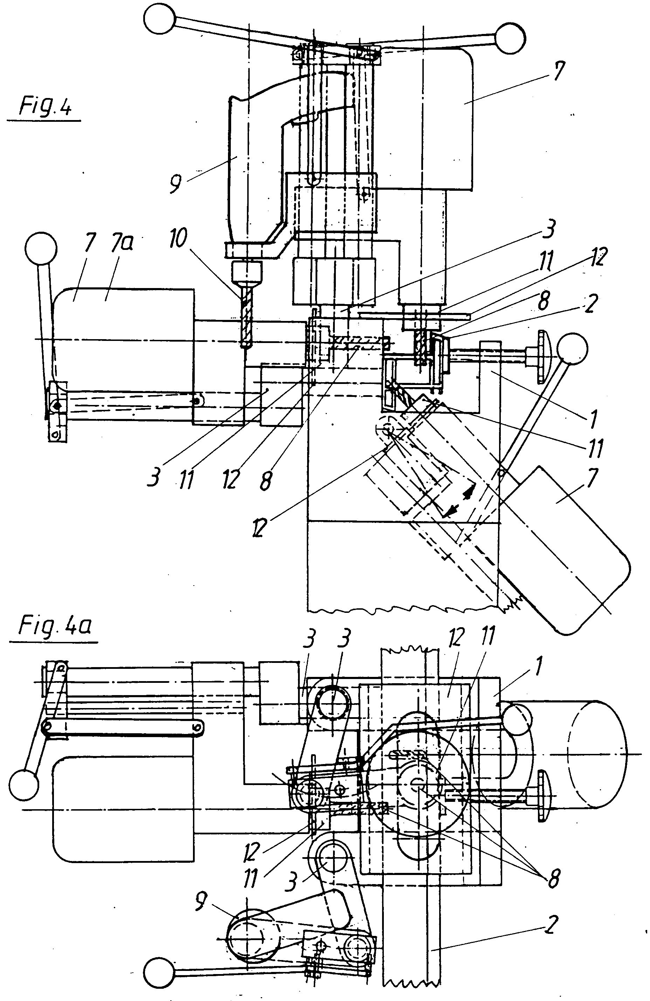

Wie aus Figuren 4, 4a zu ersehen ist, kann die erfindungsgemäße Vorrichtung universell mit Zusatzeinrichtungen ausgerüstet werden. Dabei befinden sich zwei in einer Ebene angeordnete Werkzeuge, nämlich ein Fräsmotor 7 mit Fräser 8 und eine Bohrmaschine 9 mit Bohrer 10, welche an den in Figuren 1 dargestellten Säulen 3 in vertikaler Richtung verschiebbar und wegschwenkbar gehaltert sind. Aus Figur 4a ist die weggeschwenkte Stellung der Bohrmaschine 8 zu erkennen, während sich der Fräsmotor 7 mit Fräser 8 in Arbeitsstellung befindet.

Weiterhin ist ein schräg angeordneter Fräsmotor 7 vorgesehen, welcher zum Einfräsen von Wasserschlitzen in ein Kunststoffprofil 2 dient. Zusätzlich ist dieser Fräsmotor 7 in seiner Schräglage noch verstellbar, was durch die Doppelpfeile in Figur 4 angedeutet ist.

Um handelsübliche Bohrmaschinen 9 und Fräsmotore 7 verwenden zu können, ist gemäß Figuren 5, 5a und 6, 6a der Werkzeughalter 6 so ausgebildet, daß mit einer Klemmvorrichtung 6a die stufenförmige Kopierhülse 11 auf den Hals des Fräsmotors 7 bzw. der Bohrmaschine 9 geklemmt werden kann. Eine solche Klemmvorrichtung 6a am Werkzeughalter 6 ermöglicht eine schnelle Auswechslung der Bohr- oder Fräsmotore 7, 9.

Bei tieferen Fräsungen oder Bohrungen kann es sich empfehlen, ein Zwischenstück 9a und 9b zu verwenden, das direkt in den Werkzeughalter 6 gespannt wird und auf der Oberseite die Bohrmaschine 9 oder den Fräsmotor 7 aufnimmt.

## Patentansprüche

1. Vorrichtung zum Bearbeiten von insbesondere stabförmigen Werkstücken, wie bspw. Fenster- oder Türrahmenprofile (2), mit einer an einem Maschinengestell angeordneten Aufnahme (1) für die Werkstücke (2) und wenigstens eine in einer Ebene und in einer Richtung senkrecht dazu verfahrbaren Bearbeitungseinheit (7, 9) mit wenigstens einem Bearbeitungswerkzeug (8, 10) und zugeordneter, einen Fühler (11) sowie eine das jeweilige Bohr- oder Fräsbild wiedergebende Schablone (12) aufweisenden Kopiereinrichtung, dadurch gekennzeichnet, daß die wenigstens eine Bearbeitungseinheit (7, 9) an einem um eine Achse (5) schwenkbaren und längs dieser Schwenkachse (5) von einer Ausgangsstellung in eine Bearbeitungsstellung verschiebbaren Werkzeughalter (6) gehalten ist, daß die Schwenkachse (5) ihrerseits über eine Schwinge o. dgl. Schwenkarm (4) an einer mit dem Maschinengestell verbundenen Säule (3) schwenkbar gelagert ist und daß der Fühler (11) der Kopiereinrichtung koaxial zum Bearbeitungswerkzeug (8) ausgebildet und die Schablone (12) über bzw. an der Bearbeitungsposition an dem Werkstück (2) angeordnet ist.

2. Vorrichtung nach Anspruch 1, dadurch gekennzeichnet, daß die wenigstens eine Bearbeitungseinheit (7, 9) mittels einer sich an der Schwenkachse (5) bzw. an deren Schwenkarm (4) abstützenden Hebelmechanik, vorzugsweise zwischen einstellbaren Anschlägen, längs dieser Schwenkachse (5) verschiebbar ist.

3. Vorrichtung nach Anspruch 1 oder 2, dadurch gekennzeichnet, daß die wenigstens eine Bearbeitungseinheit (7, 9) gegen die Kraft eine Feder von der Ausgangsstellung in die Bearbeitungsstellung an dem Werkstück (2) verschiebbar ist.

4. Vorrichtung nach einem der Ansprüche 1 bis 3, dadurch gekennzeichnet, daß der Schwenkarm (4) bzw. die Schwinge axial verstellbar an der maschinengestellseitigen Säule (3) gelagert ist.

5. Vorrichtung nach einem der vorhergehenden Ansprüche, dadurch gekennzeichnet, daß an der mit dem Maschinengestell verbundenen Säule (3) doppelseitige Hebelarme bzw. Schwingen mit zugeordneten Bearbeitungseinheiten angeordnet sind.

6. Vorrichtung nach einem der vorhergehenden Ansprüche, dadurch gekennzeichnet, daß wenigstens eine vertikale und eine horizontale Säule sowie wenigstens eine, vorzugsweise in ihrer Neigung gegenüber der Horizontalen verstellbare Säule mit jeweils zugeordneten Bearbeitungseinheiten (7, 9) vorgesehen sind.

7. Vorrichtung nach einem der vorhergehenden Ansprüche, dadurch gekennzeichnet, daß an der vertikal ausgerichteten Säule (3) zusätzlich eine Bohreinheit (9) mit horizontal ausgerichtetem Bohrwerkzeug (10), vorzugsweise mit einem Mehrfachbohrkopf, schwenkbar gelagert ist.

8. Vorrichtung nach Anspruch 7, dadurch gekennzeichnet, daß die zusätzliche Bohreinheit (9) mittels einer Hebelmechanik gegen die Kraft einer Feder von einer Ausgangsstellung in eine Arbeitsstellung an dem Werkstück (2) mit horizontaler Vorschubbewegung verschiebbar ist.

9. Vorrichtung nach einem der vorhergehenden Ansprüche, dadurch gekennzeichnet, daß der Fühler der Kopiereinrichtung in Art einer das jeweilige Bearbeitungswerkzeug (8, 10) koaxial umgebenden, an dem Werkzeughalter (6) festlegbaren Kopierhülse (11) ausgebildet ist, welche in die das gewünschte Bohr- bzw. Fräsbild wiedergebende Ausnehmungen (12a) in der Schablone (12) eintaucht.

10. Vorrichtung nach einem der vorhergehenden Ansprüche, dadurch gekennzeichnet, daß zwischen das jeweilige Bohr- bzw. Fräsbild wiedergebenden Aussparungen in der Schablone (12) Schlitze (22) vorgesehen sind, durch welche sich das Bearbeitungswerkzeug (8, 10) während des Verfahrens zwischen den Aussparungen erstreckt, wobei der axiale Verschiebeweg des Bearbeitungswerkzeuges (8, 10) im Bereich der Schlitze (22) durch dem Fühler (11) der Kopiereinrichtung zugeordnete Anschläge begrenzt ist.

11. Vorrichtung nach einem der vorhergehenden Ansprüche, dadurch gekennzeichnet, daß sich auf der der Bearbeitungseinheit (7) zugewandten Seite der Schablone (12), beiderseits der die Aussparungen (21) miteinander verbindenden Schlitze (22) Anlageschultern für den Fühler bzw. die Kopierhülse (11) erstrecken, welche eine Führung für den Fühler bzw. die Kopierhülse (11) bilden.

12. Vorrichtung nach einem der vorhergehenden Ansprüche, dadurch gekennzeichnet, daß die Schablone (12) mit, vorzugsweise einstellbaren Anschlagelementen (15, 16) zur Positionierung des Werkstückes versehen ist.

13. Vorrichtung nach einem der vorhergehenden Ansprüche, dadurch gekennzeichnet, daß die Schablone (12) mittels Führungen (18) quer zur Längserstreckung des Werkstückes (2) verschiebbar bzw. einstellbar ist.
